# NEUE EUROPÄISCHE PATENTSCHRIFT

(11) **EP 1 172 759 B2**
(45) Veröffentlichungstag und Bekanntmachung des Hinweises auf die Entscheidung über den Einspruch: **02.12.2009**
(45) Hinweis auf die Patenterteilung: 11.12.2002
(21) Anmeldenummer: 00114819.6
(22) Anmeldetag: 11.07.2000
(51) Int. Cl.: G06K 19/077

(54) **Sicherheitsetikett/Sicherheitsanhänger mit darin integriertem RFID-Transponder**
Security label having a built-in RFID-transponder
Etiquette de sécurité ou attache de sécurité avec transpondeur RFID

(43) Veröffentlichungstag der Anmeldung: 16.01.2002
(60) Teilanmeldung: 02019605.1
(73) Patentinhaber: X-ident technology GmbH, 52355 Düren (DE)
(72) Erfinder: Robertz, Bernd. Dr., D-52382 Niederzier-Hambach (DE); Liebler, Ralf, Dr., 52372 Kreuzau (DE)
(74) Vertreter: Castell, Klaus

(56) Entgegenhaltungen:
- EP-A- 0 520 455
- EP-A- 0 999 532
- WO-A-93/12513
- DE-A1- 4 110 683
- DE-A1- 19 720 747

## Beschreibung

Gegenstand der Erfindung sind laminierte Sicherheitsetiketten oder Sicherheitsanhänger in die ein sogenannter RFID-Transponder integriert ist.

Aus EP-A-520 455 ist ein Fluggepäckanhänger bekannt, in den ein RFID-Transponder derart integriert ist, daß beim Abtrennen eines zum Abtrennen vorbereiteten Abschnittes des Anhängers die Funktionsfähigkeit des RFID-Transponders beendet wird.

In WO 93-12 513 ist eine streifenförmige Verschlußsicherung mit einem integrierten RFID-Transponder beschrieben. Antenne und Chip sind auf dem Streifen derart räumlich voneinander getrennt angeordnet, daß beim Durchtrennen des Trägerstreifens die elektrische Verbindung zwischen Antenne und Chip unterbrochen wird. Diese Unterbrechung ist zwingend erforderlich um den RFID-Transponder funktionsunfähig zu machen.

Aus EP-A-670 563 ist ein mehrschichtiges Haftklebeetikett bekannt, welches einen elektronischen Resonanzschaltkreis aufweist. Die Spaltfestigkeit der Schichten ist so eingestellt, daß beim Ablösen des Etiketts der Schaltkreis zerstört wird.

Die DE 197 20 747 A1 offenbart ein Sicherheitselement, das als Etikett oder Siegel verwendet werden kann, mit einem Miniaturschaltkreis-Chip und einer damit verbundenen Wicklung als Antenne und mit einem externen Lesegerät drahtlos koppelbar ist. Bei einer Ausführungsvariante ist die Wicklung als Solenoid ausgebildet, der mittels eines Ferritkerns auf eine bestimmte Resonanzfrequenz abgestimmt werden kann. Ein Manipulationsversuch am Sicherheitselement führt zum Bruch einer Sollbruchstelle und damit zum Bruch des Ferritkerns. Die Resonanzfrequenz wird dadurch so verstimmt, dass das Lesegerät die Manipulation detektieren kann. Dasselbe tritt bei der anderen Ausführungsform unter Verwendung nur des Miniaturschaltkreises und der Wicklung beim Bruch der elektrischen Verbindung von beiden, aufgrund von Manipulation, im Bereich einer Sollbruchstelle auf.

Aufgabe der vorliegenden Erfindung ist es, ein "elektronisches Sicherheitsetikett" oder einen "elektronischen Sicherheitsanhänger" zu schaffen, bei dessen Entfernung von dem Platz der Verwendung der integrierte RFID-Transponder funktionsuntüchtig wird.

Diese Aufgabe wird durch ein mehrschichtiges Sicherheitsetikett nach Anspruch 1 gelöst.

Gemäß einer alternativen Ausführungsform wird die Aufgabe gelöst durch einen mehrschichtigen, streifenförmigen Sicherheitsanhänger gemäß Anspruch 2.

Im Gegensatz zu WO 93/12513 ist erfindungsgemäß eine Unterbrechung der elektrischen Verbindung zwischen Antenne und Chip nicht erforderlich, weil die irreversible Verformung der Polymerfolie die Antennenform verändert, so dass sie nicht mehr ausreichend auf die Betriebsfrequenz des RFID-Transponders abgestimmt ist.

Die Trägerschicht ist eine Polymerfolie mit einer Dicke von 20 µm bis 250 µm, die einen E-Modul (Young's Modul) gemessen nach DIN 53455 (ISO-R 527) von 0.1 bis 4.0 GPa aufweist. Die Weiterreißfestigkeit (längs bzw. quer) gemessen nach DIN 53363 kann zwischen 0.10 und 150 N betragen. Der Weiterreißwiderstand (längs bzw. quer) wird bei Folien auf die Dicke bezogen [N/mm] und kann von 10 bis 500 N/mm betragen.

Geeignete Polymerfolien sind z.B. Polyesterfolien (Polyethylenterephthalat, Polybutylenterephthalat), Polyolefinfolien, insbesondere Polyethylenfolien oder Polypropylenfolien, PVC-Folien, Polyamidfolien, Polycarbonatfolien, Polyvinylacetatfolien oder Polymethylmethacrylatfolien.

Bei Verwendung von Polymerfolie als Trägerschicht bedingt der Elastizitätsmodul und die daraus resultierende Dehnbarkeit der Folie, daß die vom Ablösen eines Etiketts vom damit gekennzeichneten Gegenstand erforderliche Kraft größer ist als die zum Dehnen der Träger.folie erforderliche Kraft, so daß beim Versuch des Ablösens des Sicherheitsetiketts von einem damit gekennzeichneten Gegenstand die Folie irreversibel zumindest in einem solchen Ausmaß gedehnt wird, daß die Antenne verstimmt wird und in dem vorgesehenen Frequenzbereich von der Antenne keine Signale mehr aufgenommen und vom Chip übertragen werden können. Umgekehrt ist auch eine Abfrage von der von dem Chip gespeicherten Informationen über die verstimmte Antenne nicht mehr möglich. Der RFID-Transponder ist aufgrund der irreversiblen Dehnung der Trägerfolie funktionsunfähig.

Die gleiche irreversible Dehnung tritt bei streifenförmigen Sicherheitsanhängern auf, wenn versucht wird, die miteinander durch die Kleberschicht verbundenen Enden der Anhängerschlaufe wieder voneinander zu lösen.

Bei den Ausführungsformen des laminierten Sicherheitsetiketts oder des laminierten Sicherheitsanhängers mit einer Polymerfolie als Trägerschicht ist die Antenne des RFID-Transponders vorzugsweise auf der mit der ersten Kleberschicht in Kontakt stehenden Oberfläche der Trägerschicht ausgebildet und auch der damit in elektrischer Verbindung stehende Chip auf dieser Oberfläche angeordnet.

Bei einer anderen Ausführungsform der Erfindung ist die bedruckbare Oberfläche durch eine zusätzliche, mit der Trägerschicht mittels einer zweiten Kleberschicht verklebte Deckschicht ausgebildet. Im Bereich des RFID-Transponders ist die Deckschicht nicht vollflächig mit der Trägerschicht verklebt und die mechanische Stabilität der Trägerschicht ist in den nicht mit der Deckschicht verklebten Teilflächen durch Schnitt- oder Stanzlinien verringert. Träger- und Deckschicht können jedoch auch vollflächig miteinander verklebt sein. Durch Aufbringen unterschiedlicher Klebermengen ergeben sich unterschiedliche Verbundhaftungen. Beispielsweise ist die Verbundhaftung zwischen Trägerund Deckschicht im Bereich des RFID-Transponders wesentlich geringer als in umgebenden Bereichen und die mechanische Stabilität der Trägerschicht ist entlang der schwächer haftenden Bereiche durch Schnitt- und Stanzlinien verringert.

Vorzugsweise ist die Kohäsion der ersten Kleberschicht kleiner als die Kohäsion der zweiten Kleberschicht. Vorzugsweise ist die Adhäsion der zweiten Kleberschicht an der Trägerschicht und/oder der Deckschicht größer als die Adhäsion der ersten Kleberschicht an der Trägerschicht und/oder am damit gekennzeichneten Gegenstand. Bevorzugt tritt Adhäsionsbruch auf

Die unterschiedliche Kohäsion und Adhäsion der Kleberschichten hat zur Folge, daß beim Versuch des Ablösens des Sicherheitsetiketts von einem damit gekennzeichneten Gegenstand oder beim Auseinanderziehen der zusammengefügten Endbereiche eines Sicherheitsanhängers eine Auftrennung des mehrschichtigen Laminats im Bereich der ersten Kleberschicht erfolgt. Die im Bereich des RFID-Transponders zumindest teilweise fehlende, zweite Kleberschicht führen dazu, daß die Haftung der ersten Kleberschicht an den damit gekennzeichneten Gegenständen oder die Haftung der zusammengeführten Endbereiche eines Sicherheitsanhängers ausreichend ist, daß beim Trennversuch zumindest Teile der Trägerschicht nicht abgelöst werden und auf dem gekennzeichneten Gegenstand verbleiben. Die Trennung erfolgt zwischen Träger- und Deckschicht in der Ebene der zweiten Kleberschicht in Bereichen ohne Kleber, wobei die Trägerschicht insbesondere an Schnitten- oder Stanzlinien weiter reißt, so daß Antennenleiterbahnen aufgetrennt werden. Dies bedingt Funktionsunfähigkeit des RFID-Transponders.

Die unterschiedliche Adhäsion und Kohäsion der ersten und zweiten Kleberschichten an den jeweils benachbarten Schichten, d. h. Deckschicht, Trägerschicht, mit Etikett gekennzeichneter Gegenstand, hat zur Folge, daß beim Versuch des Ablösens vom gekennzeichneten Gegenstand die Trägerschicht verformt wird.

Die Adhäsion der ersten Kleberschicht an der Gegenstandsoberfläche und/oder der Trägerschicht kann größer als die Adhäsion der zweiten Kleberschicht an der Trägerschicht und/oder der Deckschicht sein, um beim unbefugten Ablösen des Etiketts von der damit gekennzeichneten Oberfläche die gewünschte Delaminierung des Laminats und Verformung der Trägerschicht zu erreichen. Bevorzugt tritt Adhäsionsbruch auf.

Bei den Etiketten oder Anhängern mit einer Deckschicht kann die Antenne des RFID-Transponders entweder auf der mit der ersten Kleberschicht in Kontakt stehenden Oberfläche der Trägerschicht oder auf der mit der zweiten Kleberschicht in Kontakt stehenden Oberfläche der Trägerschicht, gegebenenfalls sogar auf beiden Oberflächen der Trägerschicht angeordnet sein. Der damit elektrisch verbundene Chip kann entweder auf der gleichen Oberfläche wie die Antenne oder auf der gegenüberliegenden Oberfläche der Trägerschicht angeordnet sein.

Um das Sicherheitsetikett auch als Vignette zum Kennzeichnen von Kraftfahrzeugen und/oder Zutrittsberechtigungskarten verwenden zu können, kann im Laminat zusätzlich eine Polymerfolie vorhanden sein, mit einer inneren Oberfläche, die in Kontakt mit der ersten Kleberschicht steht und mit einer äußeren Oberfläche. Auf der äußeren Oberfläche ist eine dritte Kleberschicht aus einem Haftkleber vorhanden, auf deren offener Oberfläche eine abziehbare Abdeckung angeordnet ist. Die Adhäsion der dritten Kleberschicht an der gekennzeichneten Oberfläche ist größer als die Kohäsion von erster und/oder zweiter Kleberschicht an den jeweils benachbarten Schichten, so daß beim Versuch, das aufgeklebte Sicherheitsetikett oder die Vignette von dem zu kennzeichnenden Gegenstand, vorzugsweise Kraftfahrzeugen und Zutrittsberechtigungsscheinen in und/oder an der ersten oder zweiten Kleberschicht delaminiert und aufgrund der geringeren mechanischen Festigkeit der Trägerschicht im Bereich des RFID-Transponders dieser so verformt wird, daß der RFID-Transponder funktionsunfähig wird. Bevorzugt tritt Adhäsionsbruch auf.

Bei einem Laminat mit der zusätzlichen Polymerfolie und dritter Kleberschicht aus einem Haftkleber kann die Adhäsion der dritten Kleberschicht an benachbarten Schichten kleiner sein als die Adhäsion der ersten und/oder zweiten Kleberschicht an benachbarten Schichten, die Kohäsion der dritten Kleberschicht, bzw. deren Adhäsion an mindestens einer der benachbarten Schichten muß jedoch größer sein als die Kohäsion bzw. die Adhäsion der zweiten Kleberschicht an mindestens einer benachbarten Schicht, um sicherzustellen, daß beim Versuch des Ablösens die Laminatstruktur durch Delaminieren soweit zerstört wird, daß der RFID-Transponder funktionsunfähig wird. Bevorzugt tritt Adhäsionsbruch auf.

Vorzugsweise ist die erste Kleberschicht eine Haftkleberschicht, auf deren offener Oberfläche eine abziehbare Abdeckung angeordnet ist. Bei Anwesenheit der zusätzlichen Polymerfolie kann die erste Kleberschicht auch ein Kaschierkleber sein.

Im Falle eines Sicherheitsanhängers kann die erste Kleberschicht auch als eine kaltsiegelnde Kleberschicht ausgebildet sein.

Die Deckschicht in den erfindungsgemäß laminierten Sicherheitsetiketten oder Sicherheitsanhängern ist vorzugsweise ein Papier mit mindestens einer gut bedruckbaren Oberfläche. Die Bedruckbarkeit kann dadurch verbessert sein, daß das Papier mit einer geeigneten Oberflächenleimung oder zumindestens eine Seite mit einer anorganisches Pigment und Bindemittel enthaltenden Beschichtung versehen ist.

Derartige Papiere mit einem Flächengewicht von 40 g/m² bis 250 g/m² sind kommerziell erhältlich. Im Falle von Sicherheitsanhängern kann die Deckschicht auch ein mit synthetischen Fasern verstärktes Papier sein.

Grundsätzlich kann die Deckschicht auch eine Polymerfolie sein mit mindestens einer gut bedruckbar ausgerüsteten Oberfläche.

Die bei bestimmten Ausführungsformen vorhandene, zusätzliche Polymerfolie kann eine Polyesterfolie, Polyolefinfolie, Folie auf Acrylatbasis, Polyamidfolie, Polycarbonatfolie oder Polyvinylchloridfolie sein.

Diese Folie hat vorzugsweise eine Dicke von 20 µm bis 250 µm. Im Gegensatz zu Polymerfolien, die als Trägerschicht verwendet werden soll diese zusätzliche Polymerfolie eine höhere mechanische Stabilität aufweisen. Die Festigkeitswerte sind mit denen die für die Trägerfolien bereits angegeben wurden vergleichbar.

Die Kleberschichten können ein Flächengewicht von 3 g/m² bis 30 g/m², vorzugsweise von 5 g/m² bis 15 g/m² haben. Die zweite und bei bestimmten Ausführungsformen auch die erste Kleberschicht kann aus handelsüblichen Heißschmelzklebern oder üblichen Kaschierklebern ausgebildet sein.

Die erste Kleberschicht und die dritte Kleberschicht sind vorzugsweise Haftkleber, beispielsweise haftklebende, wässrige Dispersionen auf Basis Acrylsäure, Acrylat (Ester mit C₁ bis C₈-Alkoholen), Methacrysäure, Methacrylat (Ester mit C₁ bis C₈-Alkoholen) und deren Copolymeren mit Vinylacetat, Acrylnitril wie Acetoacrylamid und/oder quervernetzte Comonomere, (z.B. Divinylbenzol oder Ethylendimethacrylat) mit und ohne modifizierende Harzdispersionen (Kohlenwasserstoffharze, Alkylvinylharze, Terpenphenolharze, Beta-pinenharze, Collodiumharze, Methylstyrol-Vinyltoluolharze), Acrylhaftkleber gelöst in organischen Lösungsmitteln mit z.B. Kollophonium- Triglycerid- oder hydrierten Kollophoniumharzen als klebrigmachende Komponente, durch Copolymerisation mit bifunktionellen Monomeren wie Diphenylbenzol oder Ethylendimethacrylat oder Copolymerisation mit UV-Photoinitiatoren (z.B. Benzophenongruppen) derivatisierte Acrylate, strahlenvernetzbare Haftschmelzkleber auf Acrylatbasis, Haftschmelzkleber auf Basis Isobutylen-Isopren, Isobutylen-Butadien oder Blockcopolymere mit Styrol(z.B. SIS-SB-,SBS und SE/BS-Copolymere) unter Zusatz klebrigmachender Harze, z.B. aliphatische Olefinharze, Kollophonium- oder Terpen-Phenolharze oder Polyaromate, in Benzin gelöste Haftkleber auf Naturkautschukbasis mit Cumaron-Inden, Kollophonium- oder Kohlenwasserstoffharzen (z.B. Polyterpene oder Polybeta-pinen) als Klebrigmacher.

Die Haftkleberschicht wird zur Handhabung vor Gebrauch mit einer ablösbaren Abdeckung versehen. Derartig ablösbare Abdeckungen können sogenannte Trennpapiere sein, das sind Papiere, die mindestens eine so ausgerüstete Oberfläche aufweisen, daß bei Kontakt mit dem Haftkleber eine Verbindung ausgebildet wird, die jedoch ohne Beeinträchtigung der Klebwirkung der Haftkleberschicht wieder lösbar ist.

Geeignete Trennpapiere sind solche mit einer Oberflächenschicht auf der Vorderseite, die als Trennmittel enthalten kann: Polymere auf der Basis von Celluloseacetat, (Meth)acrylaten, Acrylnitril, Vinylchlorid, Vinylethern oder deren Copolymeren mit z.B. Maleinsäureanhydrid oder modifiziert mit Aldehyd- oder Iminharzen, Wachse auf der Basis von Polyethylen- oder Polyamin bzw. deren Mischungen mit Polymeren auf der Basis von Nitrozellulose, Polystyrol oder Vinylchlorid-Vinylacetatcopolymere, Vinylester mit langkettigen Alkoholen, Metallstearaten und darauf basierenden Derivaten, vernetzten Polyorganosiloxanen, gegebenenfalls in Mischung mit Vinylethern und/oder Maleinsäureanhydridpolymeren.

Silikonhaltige Adhäsivschichten oder Trennschichten werden aus Lösungen organischer Lösemittel oder aus wässriger Emulsion oder als flüssige Polyorganosiloxane auf ein geeignetes Trägermaterial aufgebracht und anschließend vernetzt. Die Vernetzung kann durch katalysierte Kondensation, durch Additionsreaktion wie Hydrosylilierung oder mittels UV- oder ESH-Strahlen erfolgen.

Bei der Ausführungsform der Erfindung als Sicherheitsanhänger kann die erste Kleberschicht auch eine Kaltsiegelkleberschicht sein, die in mindestens zwei in Abstand voneinander angeordneten Bereichen auf der Oberfläche der Trägerschicht angeordnet ist, so daß das Anhängeetikett an dem zu kennzeichnenden Produkt durch Umschlingen zumindest eines Teils angebracht werden kann und die beiden Bereiche mit Kaltsiegelkleber aufeinandertreffen und sich gegenseitig versiegeln.

Der RFID-Transponder mit Antenne wird in einem Endbereich des streifenförmigen Anhängers angeordnet, so daß er in dem Bereich angeordnet ist, der nach dem Umschlingen mit dem anderen Endbereich gegenseitig versiegelt wird.

Da die Kaltsiegelkleberschicht nur gegen sich selbst siegelt und gegenüber der anderen Oberfläche der Trägerschicht blockfrei ist, kann der Kaltsiegelkleber auch auf der gesamten Oberfläche der Trägerschicht aufgebracht werden, ohne daß das anhängende Etikett beim Anbringen am zu kennzeichnenden Produkt selbst anklebt.

Es können für diese Ausführungsform bekannte, im wesentlichen blockfreie Kaltsiegelkleber verwendet werden. Kaltsiegelkleber und deren Eigenschaften sind z.B. beschrieben von L. Placzek in Coating, 18(4), Seiten 94-95, 1905. Der Hauptanteil vieler gängiger Kaltsiegelkleber ist ein Naturlatex in Kombination mit einem plastischen Polymer und weiteren üblichen Zusatzstoffen, wie klebrigmachenden Harzen, anorganischen Antiblockmitteln wie Kieselsäure, Stabilisatoren und Netzmitteln.

Eine solche typische Zusammensetzung enthält 55-60 Gew.% einer Naturlatexemulsion mit hohem Ammoniakgehalt, 30-40 Gew.% einer Styrol-Acrylatemulsion und kleine Mengen von Benetzungsmitteln, Latexstabilisatoren, Antioxidantien, Bioziden und Verdickungsmitteln.

Weitere Kaltsiegelkleber insbesondere auf der Basis wäßriger Polyacrylatdispersionen sind in den US-A-5,070,164, US-A-4,898,787 und US-A-4,888,395 beschrieben.
Ein besonders geeigneter Kaltsiegelkleber auf der Basis einer wäßrigen Acrylatcopolymerdispersion bzw. -lösung welche hergestellt wird durch Emulsionspolymerisation von Alkylestern der Acrylsäure und der Methacrylsäure und von α,β-ethylenisch ungesättigten Carbonsäuren ist in DE-A-43 41 815 offenbart.
In EP-B-338 304 ist ein weiterer synthetischer Kaltsiegelkleber beschrieben, der zur Verwendung in dieser Ausführungsform der vorliegenden Erfindung besonders geeignet ist. Diese Kaltsiegelklebstoffzusammensetzung enthält 45-70 Gew.% eines synthetischen Basispolymeren und 30-55 Gew.% eines synthetischen, sekundären Polymeren, wobei das Basispolymer ein Polymer, ein Copolymer und eine Mischung davon umfaßt, ausgewählt aus der Gruppe aus Acrylpolymeren und Styrol-Butadienkautschuken und das sekundäre Polymer ein Styrol-Acrylpolymer, ein synthetisches Styrol-Acrylharz oder eine Mischung davon oder eine Mischung aus einem oder mehreren Styrol-Acrylpolymeren oder Styrol-Acrylharzen oder irgendeine Mischung davon mit einem oder mehreren synthetischen Polymeren, Copolymeren oder synthetischen Harzen umfaßt.
Der Kaltsiegelkleber wird vorzugsweise mit einem Auftragsgewicht von 3 g/m² bis 20 g/m² besonders bevorzugt in Mengen von 8-15 g/m² aufgebracht.

Für den Fall, daß die der ersten Kleberschicht gegenüberliegende Oberfläche der Trägerschicht oder die freie Oberfläche der Deckschicht eine unerwünschte Blockwirkung mit der Kaltsiegelkleberschicht aufweisen Blockneigung gegenüber dem Kaltsiegelkleber haben sollte, kann die Oberfläche mittels geeigneten Antiblockmitteln ausgerüstet werden.

Geeignete organische Mittel, um das Blocken mit dem Kaltsiegelkleber in aufgerolltem Zustand zu verhindern und gleichzeitig die Bedruckbarkeit nicht zu beeinträchtigen sind beispielsweise Polyamide, Polyamidwachse wie Octodecanamid, Bis-Stearoylethylendiamid, Montanwachse, Polyolefinwachse wie Polyethylenwachse mit einem Schmelzpunkt von 50°C bis 60°C in Form anionisch stabilisierter wäßriger Dispersionen mit einem pH-Wert von 7-9, Esterwachse z.B. Octadecylstearat, Calciumstearat, Zinkstearat, Poly(meth)acrylate mit Alkylseitenketten mit 16--20 Kohlenstoffatomen, z.B. Octadecylacrylat und deren Copolymere mit Acrylsäure, Polyvinylester, z.B. Vinylstearat, Vinylpalmitat, Vinylarachidat, Vinylbehenat, gegebenenfalls in Kombination mit Vinylalkohol und/oder Polyvinylacetat.

Geeignete Formulierungen zum Ausrüsten der Oberflächen mit Antiblockmittel, um Blocken mit Kaltsiegelkleber zu vermeiden sind im Handbook of Pressure Sensitive Adhesive Technology, herausgegeben von Don Sathas, beschrieben.

Vorzugsweise werden die Sicherheitsetiketten oder Sicherheitsanhänger als ein durchgehendes Band mit einer Vielzahl von Etiketten oder Anhängern ausgebildet. Um das Abtrennen von Einzeletiketten oder Anhängern vom Band zu erleichtern, kann das durchgehende Band zwischen den Etiketten quer zur Bandlaufrichtung vorbereitete Trennlinien, beispielsweise Perforierungen aufweisen. Die vorbereiteten Trennlinien sollen sichtbar sein, um das passergenaue Einstellen von Etiketten und Anhängern beim Bedrucken zu erleichtern. Die Etiketten in Bandform können als Rollen oder in Zick-Zack-Faltung konfektioniert sein, mit jeweils bis zu 200 oder mehr Einzeletiketten oder Anhängern.

Bei Ausführungsformen mit Kaltsiegelkleberschicht als erster Kleberschicht werden diese nur in Rollenform konfektioniert.

Die Erfindung soll nun anhand einiger Zeichnungen weiter veranschaulicht werden.

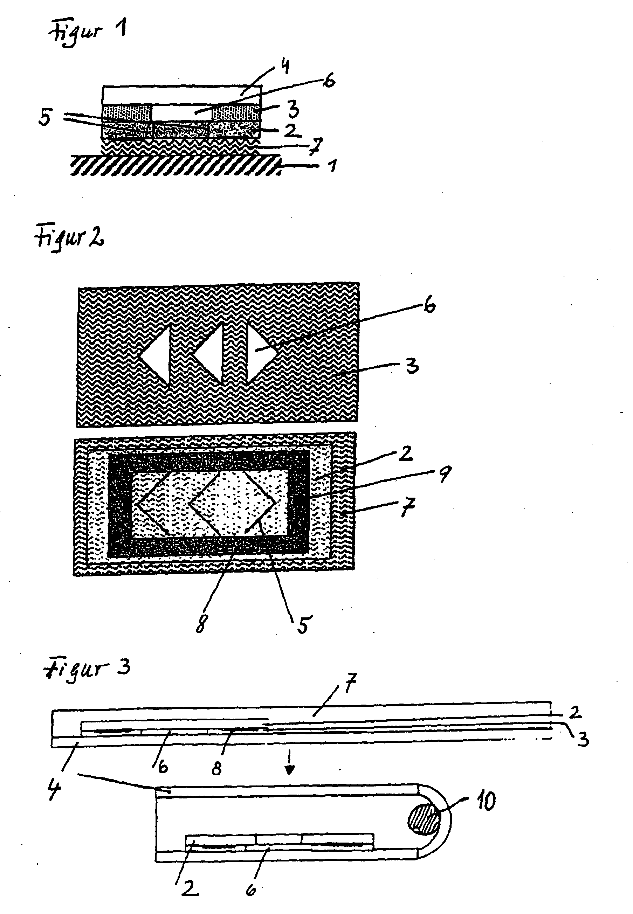

Figur 1 zeigt im Schnitt eine Ausführungsform eines Sicherheitsetiketts, das auf einem zu kennzeichnenden Gegenstand (1) mittels der ersten Kleberschicht (7) befestigt ist. Die Trägerschicht (2) und Haftkleberschicht (7) weisen im Bereich des nur schematisch angedeuteten RFID-Transponders durch die Trägerschicht und die Haftkleberschicht hindurchgehende Schnitte (5) auf, um die mechanische Stabilität der Trägerschicht in diesem Bereich zu verringern. Die Oberseite der Trägerschicht (2) ist mittels der zweiten Kleberschicht (3) nicht vollflächig mit der Deckschicht (4) verklebt. Die klebstofffreien Bereiche im Bereich eines RFID-Transponders sind mit (6) gekennzeichnet.

Abbildung 2 zeigt eine Ausführungsform von klebstofffreien Bereichen (6) in der zweiten Kleberschicht (3) und darunter die Anordnung des RFID-Transponders mit Antenne (8) und Chip (9) auf der Trägerschicht (2) und schematisch angedeutet darunter die erste Kleberschicht (7). Durch Schnittlinien (5) ist der Bereich der Trägerschicht innerhalb der Antenne (8) des RFID-Transponders in ihrer mechanischen Stabilität verringert.

Figur 3 zeigt im Schnitt einen streifenförmigen Sicherheitsanhänger mit Trägerschicht (2) für den RFID-Transponder (8), mit erster Kleberschicht (7) und der Deckschicht (4), die im Bereich des RFID-Transponders mit der zweiten Kleberschicht (3) mit der Trägerschicht verklebt ist. Diese Verklebung ist nicht vollflächig, sondern weist klebstofffreie Bereiche in (6) in der Ebene der zweiten Kleberschicht (3) auf. Im darunterliegenden Teil der Figur (3) ist der zusammengefügte Anhänger wiedergegeben, dessen rechter Teil als Schlaufe um den Griff (10) eines Gepäckstückes geschlungen ist.

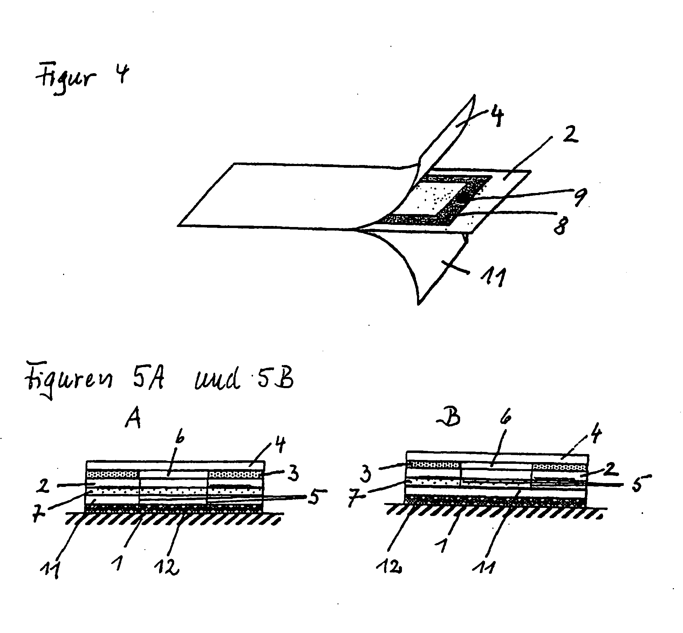

Figur 4 zeigt schematisch den Aufbau einer weiteren Ausführungsform des laminierten Sicherheitsetikettes mit Trägerschicht (2), dem darauf ausgebildeten RFID-Transponder mit Antenne (8) und Chip (9), der Deckschicht (4) und der auf der gegenüberliegenden Seite der Trägerschicht (2) angeordneten zusätzlichen Polymerfolie (11).

Bei dieser Darstellung sind die Klebstoffschichten nicht wiedergegeben.

In Figuren 5A und 5B ist der in Figur 4 schematisch wiedergegebene Aufbau des Laminats im Schnitt wiedergegeben. Mit (1) ist der zu kennzeichnende Gegenstand bezeichnet. Die Trägerschicht (2) ist mittels der zweiten Kleberschicht (3) mit der Deckschicht nicht vollflächig verklebt, bzw. weist in Teilbereichen eine wesentlich schlechtere Verbundhaftung zwischen Träger- und Deckschicht auf. Die klebstofffreien Bereiche im Bereich des RFID-Transponders nicht vollflächig verklebt. Die klebstofffreien Bereiche im Bereich des RFID-Transponders sind mit (6) bezeichnet. Die Trägerschicht (2) ist durch die erste Kleberschicht (7) mit der zusätzlichen Polymerfolie (11) verbunden, deren freie Oberfläche mit der dritten Kleberschicht (12) beschichtet ist.

In Figur 5A ist die Trägerschicht (2) und die zusätzliche Polymerfolie (11) im Bereich des RFID-Transponders durch Schnitte (5) in der mechanischen Stabilität geschwächt.

In Figur 5B reichen diese Schnitte (5) lediglich durch die Trägerschicht (2) und die erste Kleberschicht (7), die mechanische Stabilität der zusätzlichen Polymerfolie (11) ist im Bereich des RFID-Transponders nicht verringert.

Die Erfindung wird nun anhand eines Ausführungsbeispieles noch weiter erläutert.

### Beispiel :

Ein Transponderband bestehend aus einer 50µm dicken Polyethylenfolie als Trägerfolie und darauf ausgebildeten geätzten Cu-Antennen und damit in elektrischer Verbindung stehenden Chips wird auf der Oberseite mit einem thermoreaktiven Lack und auf der gegenüberliegenden Seite mit einem wasserbasierenden Haftkleber selbstklebend beschichtet und mit einem 110µm dicken Trennpapier abgedeckt. Das Transponderband wird in Form von 50 x 50 mm² Etiketten gestanzt.

Das RF-Etikett wird zum Verschließen von Briefsendungen verwendet. Die Adhäsion und Kohäsion des Haftklebers ist so gewählt, daß die Folie beim Entfernen des Etiketts irreversibel verformt wird, wodurch die Antennengeometrie derart verändert wird, daß die Resonanzfrequenz des Transponders verschoben und die normale Funktionalität des Transponders gestört wird.

### Bezugsziffernliste:

- 1: Zu kennzeichnender Gegenstand
- 2: Trägerschicht
- 3: Zweite Kleberschicht
- 4: Deckschicht
- 5: Schnitte in Trägerschicht
- 6: Klebstofffreier Bereich in der Ebene der zweiten Kleberschicht
- 7: Erste Kleberschicht
- 8: Antenne des RFID-Transponders
- 9: Chip
- 10: Griff eines Gepäckstückes
- 11: Zusätzliche Polymerfolie
- 12: Dritte Kleberschicht

## Patentansprüche

1. Mehrschichtiges Sicherheitsetikett mit mindestens einer bedruckbaren Polymerfolie mit einer Dicke von 20 µm bis 250 µm, die einen E-Modul, gemessen nach DIN 53455 bzw. ISO-R527, von 0,1 bis 4,0 GPa aufweist, als Trägerschicht (2), auf der zumindest eine Antenne (8) und ein elektrisch damit verbundener Chip (9) zur Ausbildung eines RFID-Transponders angeordnet sind und wobei auf der der bedruckbaren Oberfläche gegenüberliegenden Oberfläche der Polymerfolie eine erste Kleberschicht (7) ausgebildet ist, deren Haftung auf einem zu kennzeichnenden Gegenstand (1) derart ist, daß die zum Ablösen erforderliche Kraft größer ist als die mechanische Stabilität der Polymerfolie, so daß sich diese beim Versuch des Ablösens vom damit **gekennzeichneten** Gegenstand (1) irreversibel verformt und dadurch die normale Funktionsfähigkeit des RFID-Transponders gestört und/oder zerstört wird, wobei der RFID-Transponder aufgrund der irreversiblen Dehnung der Polymerfolie beim Ablösen und des durch Verstimmung der Antenne (8) funktionsuntüchtig wird.

2. Mehrschichtiger, streifenförmiger Sicherheitsanhänger mit einer bedruckbaren Polymerfolie mit einer Dicke von 20 µm bis 250 µm, die einen E-Modul, gemessen nach DIN 53455 bzw. ISO-R527, von 0,1 bis 4,0 GPa aufweist, als streifenförmige Trägerschicht (2) auf der mindestens eine Antenne (8) und ein elektrisch damit verbundener Chip (9) zur Ausbildung eines RFID-Transponders in einem Endbereich des Trägerstreifens (2) angeordnet sind und wobei auf der der bedruckbaren Oberfläche der Polymerfolie gegenüberliegenden Oberfläche eine erste Kleberschicht (7) ausgebildet ist, deren Haftung mit sich selbst an einer anderen Stelle des Sicherheitsanhängerstreifens derart ist, daß die zum Lösen der durch die erste Kleberschicht verbundenen Enden des Sicherheitsanhängerstreifens erforderliche Kraft größer ist als die mechanische Stabilität der Polymerfolie, so daß sich diese beim Versuch des Ablösens vom damit **gekennzeichneten** Gegenstand (1) irreversibel verformt und dadurch die normale Funktionsfähigkeit des RFID-Transponders gestört und/oder zerstört wird, wobei der RFID-Transponder aufgrund der irreversiblen Dehnung der Polymerfolie beim Ablösen und des durch Verstimmung der Antenne (8) funktionsuntüchtig wird.

3. Sicherheitsetikett oder Sicherheitsanhänger nach einem der Ansprüche 1 oder 2, **dadurch gekennzeichnet, daß** die Antenne (8) des RFID-Transponders auf der mit der ersten Kleberschicht (7) in Kontakt stehenden Oberfläche der Trägerschicht (2) ausgebildet ist und auch der damit in elektrischer Verbindung stehende Chip (9) auf dieser Oberfläche angeordnet ist.

4. Sicherheitsetikett oder Sicherheitsanhänger nach einem der Ansprüche 1, 3, **dadurch gekennzeichnet, daß** die erste Kleberschicht (7) eine Haftkleberschicht ist, auf deren offener Oberfläche eine abziehbare Abdeckung angeordnet ist.

5. Sicherheitsanhänger nach einem der Ansprüche 2 bis 3, **dadurch gekennzeichnet, daß** die erste Kleberschicht (7) eine kaltsiegelnde Kleberschicht ist.

## Claims

1. An multilayer security label with at least one imprintable polymer film having a thickness from 20 µm to 250 µm which exhibits a modulus of elasticity, measured in accordance with DIN 53455 or ISO-R527, from 0.1 GPa to 4.0 GPa by way of backing layer (2), on which at least one antenna (8) and a chip (9) electrically connected to said antenna are arranged for the purpose of forming an RFID transponder and wherein on the surface of the polymer film situated opposite the imprintable surface a first adhesive layer (7) is formed, the adhesion of which on an objet (1) to be labelled is such that the force required for detachment is greater than the mechanical stability of the polymer film, so that the latter is irreversibly deformed in the event of an attempt at detachment from the object (1) labelled therewith and thereby the normal functionality of the RFID transponder is disrupted and/or destroyed, wherein the RFID transponder becomes incapable of functioning as a result of the irreversible elongation of the polymer film when detached and by the detuning of the antenna (8).

2. A multilayer, strip-shaped security tag with an imprintable polymer film having a thickness from 20 µm to 250 µm which exhibits a modulus of elasticity, measured in accordance with DIN 53455 or ISO-R527, from 0.1 GPa to 4.0 GPa by way of stripshaped backing layer (2), on which at least one antenna (8) and a chip (9) electrically connected to said chip are arranged for the purpose of forming an RFID transponder in an end region of the carrier strip (2) and wherein on the surface situated opposite the imprintable surface of the polymer film a first adhesive layer (7) is formed, the adhesion of which to itself at another point on the security-tag strip is such that the force required for disconnecting the ends of the security-tag strip which are connected by the first adhesive layer is greater than the mechanical stability of the polymer film, so that the latter is irreversibly deformed in the event of an attempt at detachment from the object (1) labelled therewith and thereby the normal functionality of the RFID transponder is disrupted and/or destroyed, wherein the RFID transponder becomes incapable of functioning as a result of the irreversible elongation of the polymer film when detached and by the detuning of the antenna (8).

3. Security label or security tag according to one of Claims 1 or 2, ***characterised in that*** the antenna (8) of the RFID transponder is formed on the surface of the backing layer (2) that is in contact with the first adhesive layer (7), and the chip (9) which is electrically connected thereto is also arranged on this surface.

4. Security label or security tag according to one of Claims 1, 3, ***characterised in that*** the first adhesive layer (7) is a layer of contact adhesive, on the exposed surface of which a peelable covering is arranged.

5. Security tag according to one of Claims 2 to 3, ***characterised in that*** the first adhesive layer (7) is a cold-sealing adhesive layer.

## Revendications

1. Etiquette de sécurité multicouche comprenant au moins une feuille polymère imprimable d'une épaisseur comprise entre 20 µm et 250 µm présentant un module d'élasticité compris entre 0,1 et 4,0 GPa, mesuré selon DIN 53455 ou ISO-R527, formant une couche de support (2), sur laquelle sont disposées au moins une antenne (8) et une puce (9) électriquement reliée à celle-ci pour constituer un transpondeur RFID, une première couche adhésive (7) étant réalisée sur la surface de la feuille polymère opposée à la surface imprimable, dont l'adhésion à un objet (1) à marquer est telle que la force nécessaire au décollage est supérieure à la stabilité mécanique de la feuille polymère, de sorte que celle-ci est irréversiblement déformée lors de la tentative de décollage depuis l'objet (1) ainsi marqué, ce qui perturbe et/ou détruit la capacité de fonctionnement normale du transpondeur RFID, le transpondeur RFID étant inapte au fonctionnement en raison de l'extension irréversible de la feuille polymère lors du décollement et du fait du désaccord de l'antenne (8).

2. Attache de sécurité multicouche en forme de bande comprenant une feuille polymère imprimable d'une épaisseur comprise entre 20 µm et 250 µm présentant un module d'élasticité compris entre 0,1 et 4,0 GPa, mesuré selon DIN 53455 ou ISO-R527, formant une couche de support (2) en forme de bande, sur laquelle sont disposées dans une zone d'extrémité de la bande de support (2) au moins une antenne (8) et une puce (9) électriquement reliée à celle-ci pour constituer un transpondeur RFID, une première couche adhésive (7) étant réalisée sur la surface de la feuille polymère opposée à la surface imprimable, dont l'adhésion à un autre endroit de la bande d'attache de sécurité est telle que la force nécessaire au décollage des extrémités de la bande d'attache de sécurité reliées par la première couche adhésive est supérieure à la stabilité mécanique de la feuille polymère, de sorte que celle-ci est irréversiblement déformée lors de la tentative de décollage depuis l'objet (1) ainsi marqué, ce qui perturbe et/ou détruit la capacité de fonctionnement normale du transpondeur RFID, le transpondeur RFID étant inapte au fonctionnement en raison de l'extension irréversible de la feuille polymère lors du décollement et du fait du désaccord de l'antenne (8).

3. Etiquette de sécurité ou attache de sécurité selon la revendication 1 ou *2, **caractérisée en ce que*** l'antenne (8) du transpondeur RFID est formée sur la surface de la couche de support (2) qui est en contact avec la première couche adhésive (7) et **en ce que** la puce (9) électriquement associée à celle-ci est également disposée sur cette surface.

4. Etiquette de sécurité ou attache de sécurité selon l'une des revendications 1, 3, ***caractérisée en ce que*** la première couche autocollante (7) est une couche autocollante sur la surface ouverte de laquelle est disposée une couverture détachable.

5. Attache de sécurité selon l'une de revendications 2 à 3, ***caractérisée en ce que*** la première couche adhésive (7) est une couche adhésive scellant à froid.
